# EUROPEAN PATENT APPLICATION

(11) **EP 2 562 221 A1**
(43) Date of publication of application: **27.02.2013**
(21) Application number: 11771879.1
(22) Date of filing: 07.04.2011
(51) Int. Cl.: C08L 81/02, B29C 45/00, C08K 7/14, C08L 77/12

(54) **POLYARYLENE SULFIDE RESIN COMPOSITION**

(30) Priority: 23.04.2010 JP 2010099400
(71) Applicant: Polyplastics Co., Ltd., Tokyo 108-8280 (JP)
(72) Inventor: NISHIKAWA, Raita, Fuji-shi Shizuoka 416-8533 (JP); ARAI, Hiroki, Fuji-shi Shizuoka 416-8533 (JP); OHNISHI, Katsuhei, Fuji-shi Shizuoka 416-8533 (JP)
(74) Representative: Diehl & Partner GbR
(86) International application number: PCT/JP2011/058799
(87) International publication number: WO 2011/132543

(57) **Abstract**

To provide a polyarylene sulfide resin composition which contains decreased amount of chlorine, which has a high fluidity and generates small flashes at the time of molding, which has an excellent heat resistance, which can resist heat-processing under the condition of a high temperature, which has moldability at a low mold temperature, a molded article of which has an extremely small change in surface hue before and after reflow, and which is useful for use of injection-molded electronic parts (especially connector), etc. The polyarylene sulfide resin composition is obtained by blending: 100 parts by weight of a polyarylene sulfide resin (A) containing 500 to 2,000 ppm of chlorine and having 10 to 200 Pa**·**s of melt viscosity (at 310°C and shear rate of 1200 sec⁻¹), 10 to 100 parts by weight of a liquid crystalline polyester amide resin (B), and 5 to 250 parts by weight of glass fiber (C) containing 100 ppm or less of nitrogen, and having a total chlorine content of 950 ppm or less.

## Description

### Technical Field

The present invention relates to a polyarylene sulfide resin composition which contains decreased amount of chlorine, which has high fluidity and generates small flashes at the time of molding, which has excellent heat resistance, which can resist heat-processing under the condition of high temperature, which has moldability at a low mold temperature, a molded article of which has an extremely small change in surface hue before and after reflow, and which is useful for use of injection-molded electronic parts (especially connector), etc.

### Background Art

Since polyarylene sulfide (hereinafter, abbreviated as PAS) resins represented by polyphenylene sulfide (hereinafter, abbreviated as PPS) resins have high heat resistance, mechanical properties, chemical resistance, dimensional stability, and flame retardance, they have been used widely as a material for parts of electrical or electronic devices, a material for parts of vehicle devices, a material for parts of chemical devices, etc.

Meanwhile, in recent years, there has been an increasing demand for decreasing a halogen content in the materials from the viewpoint of decreasing the environmental load. Since a PAS resin is obtained by polymerization using p-dichlorobenzene and alkali metal sulfide or alkali metal hydrosulfide as raw materials, it has a property of inevitably remaining chlorine, which is one of halogen, at an end of the polymer although not contained in a main molecular backbone. From the viewpoint of the above environmental problem, a PAS resin containing small amounts of chlorine is required from the market, while it has been considered technically extremely difficult to provide a PAS resin that contains a decreased amount of chlorine without impairing the excellent properties of a PAS resin and that has excellent molding processability.

In addition, since a PAS resin has excellent compatibility with an inorganic filler, it is often used generally as a composite material with an inorganic filler added thereto. Although making it into a composite material allows expectation of a decrease in the chlorine content as a resin composition to a certain extent, there is also a limitation in the addition of an inorganic filler in view of melt fluidity and mechanical strength, and it is not possible to satisfy the chlorine decrease level required by the market only with the composite technique.

Therefore, as described in JP-A 2009-256479, for example, a method of obtaining a PAS resin composition which generates small flashes, and which has high fluidity, is of high quality, and contains small amounts of chlorine is proposed in a specific melt kneading approach using a specific PAS resin. However, it is hard to say that the PAS resin composition has a sufficient level of fluidity yet for use of compact precision parts, etc. and there used to be a case of not being able to be filled in a connector, let alone in a condition of a low mold temperature, even in a condition of a high mold temperature.

### Summary of the Invention

As described above, a PAS resin composition that has small flashes and that has high fluidity and contains small amounts of chlorine is desired from the market, while a PAS resin composition that satisfies all of these demands is not yet known.

As a result of keen examinations to solve the above-mentioned problems, the present inventors have found that there is obtained a PAS resin composition, which contains decreased amount of chlorine, which has high fluidity and generates small flashes at the time of molding, which has excellent heat resistance, which can resist heat-processing under the condition of high temperature, and which has moldability at a low mold temperature, a molded article of which has an extremely small change in surface hue before and after reflow, by causing a specific PAS resin to contain a liquid crystalline polyester amide resin and specific glass fiber, and thus have come to complete the present invention.

That is, the present invention is a polyarylene sulfide resin composition, being obtained by blending:
100 parts by weight of a polyarylene sulfide resin (A) containing 500 to 2,000 ppm of chlorine and having 10 to 200 Pa**·**s of melt viscosity (at 310°C and shear rate of 1200 sec⁻¹), 10 to 100 parts by weight of a liquid crystalline polyester amide resin (B), and
5 to 250 parts by weight of glass fiber (C) containing 100 ppm or less of nitrogen,
the composition having the total chlorine content of 950 ppm or less.

Especially, a feature of the present invention is to be able to provide a PAS resin composition which is provided both with a decreased chlorine content and high fluidity necessary to be filled in a mold for compact precision parts, which used to be difficult to achieve with a conventional PAS resin composition, and which has a high blister temperature, by using a liquid crystalline polyester amide resin in combination and also by carefully selecting glass fiber to be blended.
Furthermore, the present invention relates to an injection-molded article (especially connector) obtained by injection-molding the above PAS resin composition at a mold temperature of 60 to 100°C.

According to the present invention, it is possible to provide a PAS resin composition which contains decreased amount of chlorine, which has high fluidity and generates small flashes at the time of molding, which has excellent heat resistance, which can resist heat-processing under the condition of high temperature, and which has moldability at a low mold temperature, a molded article of which has an extremely small change in surface hue before and after reflow.
A PAS resin composition of the present invention is capable of being filled in a condition of a low mold temperature that has a great effect of suppressing flashes, even in the field of compact precision parts that has a strict threshold setting for a halogen free demand and that gives importance particularly to small flashes. Furthermore, the PAS resin composition has features of exhibiting excellent heat resistance in a high temperature range, and of having an extremely small change in mechanical strength of the electronic part after the process of soldering and in an appearance (hue) in a case of, for example, being used for electronic parts for surface implementation, even when carrying out heat-processing under the condition of high temperature by passing through a reflow furnace in soldering to a substrate. Therefore, the PAS resin composition is especially useful for use of injection-molded electronic parts (especially connector), etc.

### Brief Description of the Drawings

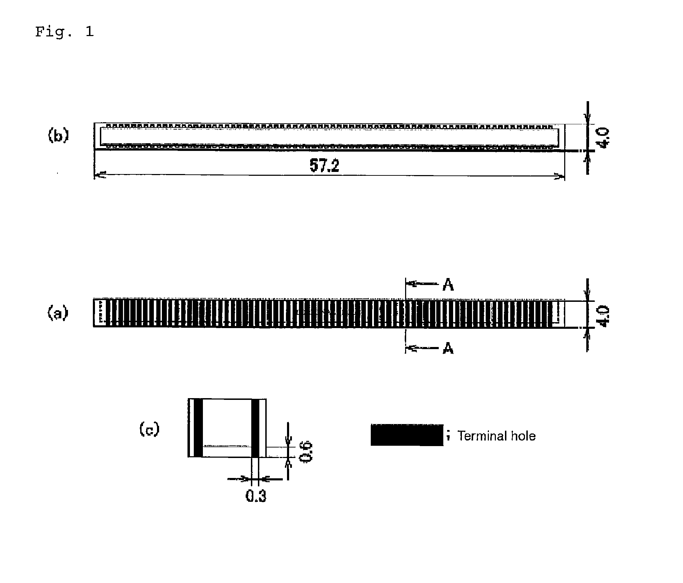

[Fig. 1] Fig. 1 is a drawing illustrating a 0.6 mm pitch connector of Examples of the present invention. (a) is a top view, (b) is a side view, and (c) is an A-A cross-sectional view.

### Detailed Description of the Invention

A specific description is given below to the present invention.
The PAS resin (A) is configured mainly with -(Ar-S-(wherein Ar is an arylene group) as a repeating unit. As the arylene group, it is possible to use, for example, p-phenylene group, m-phenylene group, o-phenylene group, substituted phenylene group, p,p'-diphenylene sulfone group, p,p'-biphenylene group, p,p'-diphenylene ether group, p,p'-diphenylene carbonyl group, a naphthalene group, and the like.
In this case, among arylene sulfide groups configured with the above arylene group, there is also a case where, other than a polymer using an identical repeating unit, that is, a homopolymer, a copolymer containing a repeating unit of a different type is preferred from the viewpoint of the processability of a composition.
As the homopolymer, polyphenylene sulfide having a p-phenylene sulfide group as a repeating unit using a p-phenylene group as an arylene group is preferably used. In addition, as the copolymer, among arylene sulfide groups made with the above arylene group, it is possible to use a combination of two or more types different from each other, and among all, a combination including a p-phenylene sulfide group and an m-phenylene sulfide group is especially preferably used. Among them, those containing 70 mol% or more, preferably 80 mol% or more, of a p-phenylene sulfide group is appropriate from the viewpoints of physical properties, such as heat resistance, moldability or mechanical properties.

Furthermore, among these PAS resins, although a high molecular weight polymer of a substantially linear structure obtained by polycondensation from a monomer having a bifunctional halogen aromatic compound as a main component is used preferably, other than a PAS resin of a linear structure, it is also possible to use a polymer partially with a branched structure or a crosslinking structure formed therein by using a small amount of a monomer such as a polyhalo aromatic compound having three or more halogen functional groups, during the polycondensation, and it is also possible to use a polymer or a mixture thereof, having improved molding processability obtained by heating a low molecular weight polymer of a linear structure at a high temperature under the presence of oxygen or an oxidant, to increase the melt viscosity by oxidative crosslinking or thermal crosslinking.

It should be noted that, as the PAS resin (A) used for the present invention, in order to obtain a desired chlorine content, a high molecular weight PAS resin having a linear structure is particularly preferable. A chlorine content in the polymer is usually dependent on the molecular weight of the polymer. That is, a low molecular weight polymer having a large total number of molecular ends contains a large amount of chlorine, and a high molecular weight polymer having a small total number of molecular ends contains a small amount of chlorine. Therefore, in order to obtain a PAS resin composition containing a small amount of chlorine, it is preferable to use a high molecular weight polymer. Furthermore, the PAS resins are, as described above, roughly classified into a linear (straight chain) type and a thermal crosslinking type depending on the molecular structure, and since the thermal crosslinking type PAS resin is obtained by oxidative crosslinking using a low molecular weight PAS resin containing a large amount of chlorine as a raw material, it contains a large amount of chlorine in general, and thus it is preferable to use the linear type PAS resin.
In addition, the PAS resin used for the present invention preferably eliminates byproduct impurities, etc. for purification by carrying out acid washing, hot water washing, organic solvent washing (or a combination thereof), etc. after polymerization.

Among these PAS resins, those used for the present invention essentially contains 500 to 2, 000 ppm of chlorine in the resin, more preferably 1000 to 1500 ppm. As long as 500 to 2, 000 ppm of chlorine is contained, the method of producing a PAS resin is not limited especially.
Although the amount of chlorine contained in the PAS resin composition decreases by blending the liquid crystalline polyester amide resin and the glass fiber, it becomes difficult to achieve an intended total chlorine content of 950 ppm or less in the PAS resin composition when the amount of chlorine contained in the PAS resin exceeds 2,000 ppm. When the total chlorine content in the PAS resin composition exceeds 950 ppm, the chlorine decrease level required by the market cannot be satisfied. Meanwhile, a PAS resin containing less than 500 ppm of chlorine is difficult to be obtained in a usual production method.

In should be noted that the chlorine content in the present invention is a value measured by a combustion ion chromatography method through the use of an ion chromatograph (DX320 manufactured by DIONEX). A sample was fed into pretreatment equipment for combustion, and automatic measurement was carried out in the following measurement conditions.

### «Measurement Conditions»

Pretreatment Equipment for Combustion: AQF-100, ABC, WS-100, GA-100 manufactured by Mitsubishi Chemical Corporation
Sample: approximately 10 mg
Heater: Inlet Temp/900°C, Outlet Temp/1000°C
Absorbent Liquid: H₂0₂ 900 ppm, Internal Standard PO₄³⁻ 25 ppm

In addition, the PAS resin (A) has 10 to 200 Pa**·**s of melt viscosity (at 310°C and shear rate of 1200 sec⁻¹), and more preferably has 30 to 140 Pa**·**s. When the melt viscosity is too low, it becomes extremely difficult to obtain a PAS resin containing 500 to 2,000 ppm of chlorine, and when the melt viscosity is too high, a filling defect (short shot) is generated, molding stability becomes deteriorated because of causing a mold release defect, etc., or it becomes difficult to mold a thin wall molded article, which is not preferable.

The liquid crystalline polyester amide resin (B) used for the present invention means melt-processable polyester amide having, in general, a melting point in a range of 270 to 370°C and having properties capable of forming an optically anisotropic molten phase. The property of an anisotropic molten phase can be confirmed through the use of a commonly used polarization testing method utilizing orthogonal polarizers. More specifically, the confirmation of an anisotropic molten phase can be made by observing a molten sample placed on a Leitz hot stage through the use of a Leitz polarizing microscope in a nitrogen atmosphere at 40-fold magnification. A liquid crystalline polyester amide resin applicable to the present invention, when tested between orthogonal polarizers, usually transmits even in a melt-resting state, and exhibits optical anisotropy.
The liquid crystalline polyester amide resin (B) used for the present invention includes, as a monomer constituted, aromatic hydroxycarboxylic acid, aromatic carboxylic acid, aromatic diol, or the like, and contains, in addition to these monomers, one type or two or more types of 4-aminophenol, 1,4-phenylenediamine, 4-aminobenzoic acid, and a derivative thereof, and in general, contains an amide component at a ratio of 2 to 35 mol% in the total bond. Further preferably, an amide component is contained at a ratio of 15 to 35 mol% in the total bond.
The aromatic hydroxycarboxylic acid includes 4-hydroxybenzoic acid, 6-hydroxy-2-naphthoic acid, or the like, the aromatic carboxylic acid includes terephthalic acid, isophthalic acid, 4,4'-diphenyldicarboxylic acid, 2, 6-naphthalenedicarboxylic acid, or the like, and the aromatic diol includes 2,6-dihydroxynaphthalene, 4,4'-dihydroxybiphenyl, hydroquinone, resorcin, or the like.
In addition, also such a monomer includes derivatives of these compounds.
The monomer for containing an amide component at a ratio of 2 to 35 mol% includes the above mentioned 4-aminophenol, 1,4-phenylenediamine, 4-aminobenzoic acid, and a derivative thereof, for example, 4-acetoxy-aminophenol, or the like.

More specifically, the liquid crystalline polyester amide resin (B) is preferably wholly aromatic polyester amide obtained by copolymerizing the following monomers (i) to (v) in the ranges described below.
(i) 6-hydroxy-2-naphthoic acid
(iv) 4-hydroxybenzoic acid
   Amount of (i) + (iv) is 30 to 90 mol%
(ii) 4-aminophenol: 2 to 35 mol%
(iii) terephthalic acid: 5 to 35 mol%
(v) bisphenol: 2 to 35 mol%

Furthermore, it is also preferred that the melt viscosity of the liquid crystalline polyester amide resin (B) is 10 to 40 Pa**·**s of melt viscosity at a temperature 10 to 30°C higher than the melting point and at a shear rate of 1000 sec⁻¹. When the melt viscosity is too low, the heat resistance and the mechanical properties sometimes become poor, and when the melt viscosity is too high, a filling defect (short shot) is generated, molding stability becomes deteriorated because of causing a mold release defect, etc., or it becomes difficult to mold a thin wall molded article, and thus it is not preferable.

The blending amount of the liquid crystalline polyester amide resin (B) is, relative to 100 parts by weight of the PAS resin (A), 10 to 100 parts by weight and more preferably 30 to 60 parts by weight. When the blending amount is less than 10 parts by weight, the fibrous liquid crystalline polyester amide resin does not exhibit a substantial reinforcement effect, has almost no advantage over the performances of only the PAS resin, and cannot achieve the intended effect of improving flash properties. In contrast, when the blending amount exceeds 100 parts by weight, the matrix serves as a liquid crystalline polyester amide resin, and thus the properties of the PAS resin do not come to be utilized, which is not preferable.

Usually, the glass fiber is subjected to surface treatment for imparting convergence and imparting bondability with the matrix, and as a surface treatment agent, a urethane resin and a silane-based coupling agent are used. The glass fiber (C) used for the present invention essentially contains 100 ppm or less of nitrogen derived from the surface treatment agent. As long as the nitrogen is contained 100 ppm or less, the shape is not especially limited and it may be glass fiber having a usual fiber diameter and the type is not also especially limited, while E glass is preferred.
When the glass fiber contains more than 100 ppm of nitrogen, the blister temperature decreases, and thus it is not desired. A smaller amount of nitrogen contained exhibits favorable properties with respect to the blister temperature, while 50 ppm or more is preferred in consideration of the mechanical strength and the convergence of the glass fiber.
Meanwhile, the blister temperature means a maximum temperature of not blistering on the surface in immersing a test piece for blister evaluation, in a silicone oil at an arbitrary temperature for five minutes, and it can be said that, the higher this temperature is, the higher the heat resistance is.

The nitrogen content in the present invention is a value measured by oxidation decomposition / chemiluminescence method through the use of a trace nitrogen sulfur analyzer (TS-100 manufactured by Mitsubishi Chemical Corporation). The amount of nitrogen in the sample was obtained from a counted value by measuring the sample in the following measurement conditions with the trace nitrogen sulfur analyzer through the use of a calibration curve showing the relationship between the amount of nitrogen obtained from a pyridine/toluene mixed solution having a known amount of nitrogen and the counted value.

### «Measurement Conditions»

Sample: approximately 10 mg
Heater: Inlet Temp/800°C, Outlet Temp/1000°C
Calibration Curve of Amount of Nitrogen: created by using a pyridine/toluene mixed solution (amount of nitrogen: 50, 500 ppm)

The blending amount of the glass fiber (C) containing 100 ppm or less of nitrogen is 5 to 250 parts by weight relative to 100 parts by weight of the PAS resin (A), preferably 30 to 150 parts by weight, and more preferably 50 to 130 parts by weight. When the blending amount of the component (C) is less than 5 parts by weight, the composition thus obtained does not contain 950 ppm or less of chlorine and also sufficient mechanical strength is not obtained. When the blending amount of the component (C) exceeds 250 parts by weight, the moldability and the mechanical strength decrease, and thus it is not preferred.

The PAS resin composition obtained by the present invention preferably has a connector filling pressure of 250 MPa or less and more preferably 200 MPa or less, as a PAS resin composition used for reasonably carrying out molding of a connector. When the connector filling pressure is too high, a filling defect (short shot) is generated by exceeding an upper limit (upper limit injection pressure) of the injection capability of the molding machine, a mold release defect or the like is caused, which deteriorates molding stability, or it becomes difficult to mold a thin wall molded article.

The PAS resin composition of the present invention is widely used for molded articles such as a material for parts of electrical or electronic devices, a material for parts of vehicle devices or a material for parts of chemical devices, by injection molding.
The mold temperature at the time of injection molding is preferably 60 to 100°C. Setting of this mold temperature makes it possible to suppress flash generation, which is a serious problem of a PAS resin. In a usual PAS resin composition, when the mold temperature is set to 150°C or less, the surface condition of an injection-molded article becomes deteriorated after soldering reflow, which is a post-processing, and thus it is difficult to set the mold temperature to 150°C or less, whereas such a deteriorated surface condition does not appear in the PAS resin composition of the present invention, and it is possible to set the mold temperature to 60 to 100°C, and even in the condition, an excellent injection-molded article is obtained.
Especially regarding the connector, since it has an extremely complex shape, there are many flash generation areas, and thus the technique to suppress flash generation by injection molding at a mold temperature of 60 to 100°C is a practically extremely effective means.

### Examples

Hereinafter, a specific description will be given to the present invention by using Examples, but the present invention is not limited to them. Meanwhile, the specific substances of the respective components (A), (B), and (C) used for Examples and Comparative Examples are as follows.

### (A) PAS Resin

- A-1: Fortron KPS W214A, produced by Kureha Corporation (linear PPS, viscosity of 130 Pa**·**s at 310°C at shear rate of 1200 sec⁻¹, chlorine content of 1,500 ppm)
- A-2: Fortron KPS W203A, produced by Kureha Corporation (linear PPS, viscosity of 30 Pa**·**s at 310°C at shear rate of 1200 sec⁻¹, chlorine content of 4,000 ppm)

### (B) Liquid Crystalline Polyester Amide Resin

- B-1:
   After feeding raw materials using the followings as raw material monomers, a catalyst, and an acylating agent, the temperature of a reaction system was increased to 140°C and the raw materials were reacted at 140°C for one hour. After that, the temperature of the reaction system was further raised to 330°C over 3.5 hours, and from there, the pressure of the system was reduced to 10 Torr (that is, 1,330 Pa) over 20 minutes, and melt polymerization was carried out while distilling acetic acid, excessive acetic anhydride, and other low boiling point components. After the stirring torque reaches a predetermined value, nitrogen was introduced and the system was put into a pressurized state from a reduced pressure state through an ordinary pressure, and thus polyester amide B-1 was obtained from a lower portion of the polymerization container. The polyester amide B-1 had a melting point of 335°C and a melt viscosity of 18 Pa**·**s (at 350°C at a shear rate of 1000 sec⁻¹).

(A) 4-hydroxybenzoic acid 188.25 g (60 mol%)
(B) 6-hydroxy-2-naphthoic acid 21.37 g (5 mol%)
(C) terephthalic acid 66.04 g (17.5 mol%)
(D) 4,4'-biphenol 52.87 g (12.5 mol%)
(E) 4-acetoxy-aminophenol 17.17 g (5 mol%)
   potassium acetate 50 mg
   acetic anhydride 226.31 g

### (B') Liquid Crystalline Polyester Resin

- B-2:
   Polyester B-2 was obtained in the same way as the production of B-1 by using the followings as raw material monomers, a catalyst, and an acylating agent. The polyester B-2 had a melting point of 280°C and a melt viscosity of 40 Pa**·**s (at 300°C, at a shear rate of 1000 sec⁻¹).

(A) 4-hydroxybenzoic acid 226.4 g (73 mol%)
(B) 6-hydroxy-2-naphthoic acid 114.1 g (27 mol%)
   potassium acetate 22.5 mg
   acetic anhydride 233.8 g
(C) Glass Fiber
   - C-1: chopped strands
      (ECS03T-747, produced by Nippon Electric Glass Co., Ltd.)
   - C-2: chopped strands
      (EC10 3MM 910, produced by OCV (TSU) JAPAN K.K.)
   - C-3: chopped strands
      (ECS03T-747H, produced by Nippon Electric Glass Co., Ltd.)

### Examples 1 to 10 and Comparative Examples 1 to 6

After dry-blending a PAS resin, a liquid crystalline polyester amide resin (or liquid crystalline polyester resin), and glass fiber at a ratio shown in Table 1, the resultant blended material was fed into a twin screw extruder at a cylinder temperature of 350°C (the glass fiber was separately added from a side feeder portion of the extruder), and was melt-kneaded for pelletization.
From the pellets, various test pieces were prepared by an injection molding machine, and evaluation was carried out. The results are shown in Table 1.

Furthermore, evaluation methods in Examples and Comparative Examples were as follows. Meanwhile, the chlorine content and the nitrogen content were measured in the methods described above.

### «Evaluation of Flash Generation»

Through the use of a mold of a disk-shaped cavity provided with a flash measuring unit having a mold space of 20 µm on an outer periphery, injection molding was carried out at a minimum pressure necessary to fully fill in the cavity, and a length of a flash generated in the area was measured by enlarging with an image projector.
- Mold Temperature: 80°C (140°C in Example 1 and Comparative Example 2)
- Cylinder Temperature: 350°C

### «Connector Filling Pressure»

Molding was carried out in the following conditions by using a 0.6 mm pitch connector mold (basic wall thickness of 0.6 mm, total length of 57.2 mm, pitch between terminals 0.3 mm, terminal pitch of 0.3 mm, number of electrodes 90 pins x 2 rows (180 pins in total)) shown in Fig 1, and a minimum pressure for filling a molded article was measured. It can be said that, as the filling pressure is lower, the material is excellent in fluidity.
- Mold Temperature: 80°C (140°C in Example 1 and Comparative Example 2)
- Cylinder Temperature: 340°C (330°C only in Comparative Example 5)
- Injection Speed: 200 mm/sec

### «Change in Connector Surface Hue before and after Reflow»

The presence of a change in surface hue before and after IR reflow was evaluated using the 0.6 mm pitch connector molded article (mold temperature: 80°C (140°C in Example 1 and Comparative Example 2)) described above. O denotes a case of not visually finding a change in color before and after reflow, and X denotes a case of finding a change in color.

The IR reflow conditions are as follows.
- Measuring Machine: large size desktop reflow soldering equipment RF-300 (using a far infrared heater), manufactured by Japan Pulse Laboratories, Inc.
- Sample Feeding Speed: 140 mm/sec
- Reflow Furnace Passing Time Period: 5 min.
- Peak Temperature: 250°C

### «Blister Test»

A molded article having a length of 124 mm, a width of 12 mm, and a thickness of 0.8 mm was molded in the following conditions, and test pieces for blister evaluation were prepared. After immersing the test pieces thus obtained in a silicone oil having an arbitrary temperature for five minutes, the surface was observed. A maximum temperature of not blistering on the surface was defined as a blister temperature: Blister Free Temp. (BFT). As long as it is 260°C or more, the maximum temperature can be said as a product strength level having practically no problem, while the higher this value is, the higher the heat resistance is, which is preferable.
- Mold Temperature: 80°C (140°C in Example 1 and Comparative Example 2)
- Cylinder Temperature: 340°C

The results are shown in Table 1.

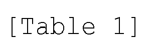

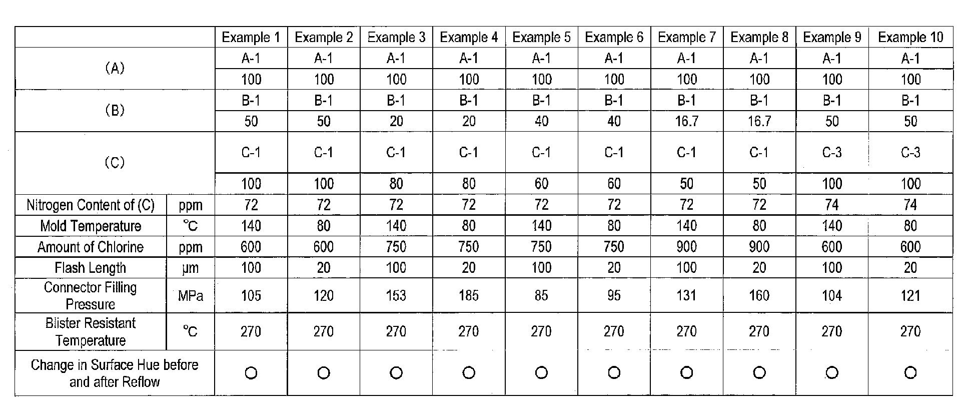

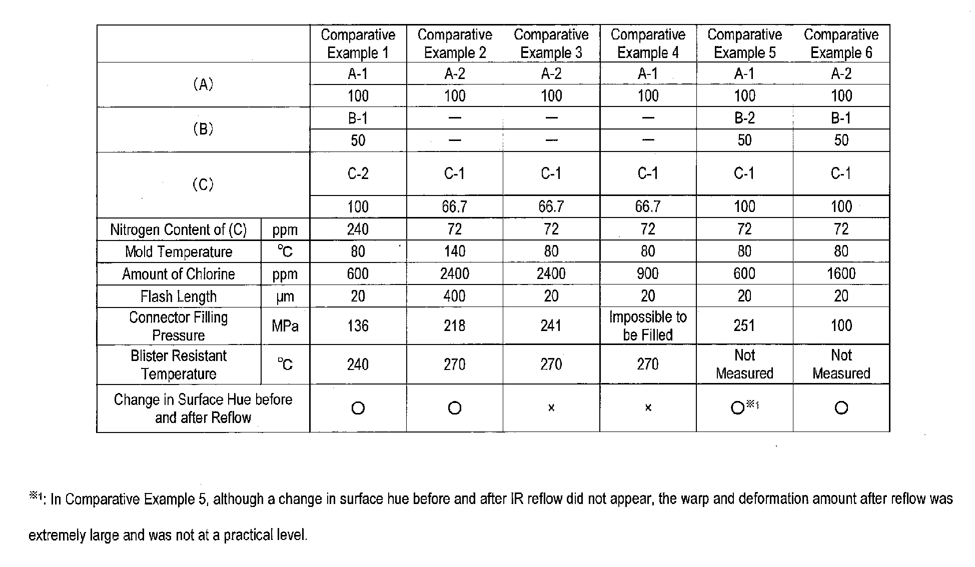

## Claims

1. A polyarylene sulfide resin composition, being obtained by blending:
100 parts by weight of a polyarylene sulfide resin (A) containing 500 to 2,000 ppm of chlorine and having 10 to 200 Pa**·**s of melt viscosity (at 310°C and shear rate of 1200 sec⁻¹), 10 to 100 parts by weight of a liquid crystalline polyester amide resin (B), and
5 to 250 parts by weight of glass fiber (C) containing 100 ppm or less of nitrogen,
the composition having the total chlorine content of 950 ppm or less.

2. An injection-molded article, obtained by injection-molding the polyarylene sulfide resin composition according to claim 1 at a mold temperature of 60 to 100°C.

3. A connector, obtained by injection-molding the polyarylene sulfide resin composition according to claim 1 at a mold temperature of 60 to 100°C.
